# EUROPEAN PATENT SPECIFICATION

(11) **EP 1 002 604 B1**
(45) Date of publication and mention of the grant of the patent: **30.05.2007**
(21) Application number: 99850170.4
(22) Date of filing: 16.11.1999
(51) Int. Cl.: B23B 27/14

(54) **A cutting insert having a chip former**
Ein Schneideinsatz mit einem Spanformer
Une plaquette de coupe ayant un brise-copeaux

(30) Priority: 20.11.1998 SE 9803966
(43) Date of publication of application: 24.05.2000
(73) Proprietor: SECO TOOLS AB, S-737 82 Fagersta (SE)
(72) Inventor: Norström, Thomas, 737 31 Fagersta (SE)
(74) Representative: Taquist, Henrik Lennart Emanuel

(56) References cited:
- WO-A-96/08330
- US-A- 3 751 782
- US-A- 5 660 507
- US-A- 5 676 495

## Description

The present invention relates to a turning insert for cutting machining of metallic workpieces in accordance with the preamble of the independent claims and as shown in US-A-3,751 ,782. More specifically the present invention relates to a turning insert with a chip former, developed foremost to be used at internal turning.

### Prior art

Special demands are put on the tool during turning of internal surfaces in comparison with external longitudinal turning, such as low cutting forces due to long moment arms and controlled chip forming in order not to damage the generated surface. EP-A2-0 422 586 relates to a single sided cutting insert having an elliptical chip breaker which directs the chip in a desired direction while however endangering to damage the generated surface. Through US-A-4,681,487 is previously known a double-sided cutting insert for external turning with a chip breaker both for fine and rough turning. US-A-3,751,782 discloses a cutting insert comprising a right prism of hard material, each end face of the prism having at least two identical cutting corners and being formed with a plurality of tapering recesses of V-shaped section.

### Objects of the invention

One object of the present invention is to provide a cutting insert, which remains stable also at internal turning.

Another object of the present invention is to provide a cutting insert producing chips that do not damage the generated surface.

Another object of the present invention is to provide a cutting insert that gives low cutting forces.

Another object of the present invention is to provide a cutting insert with strong cutting corners.

Another object of the present invention is to provide a cutting insert that gives controlled chip forming.

These and other objects of the present invention are realized by a cutting insert, which has obtained the characteristics indicated in the subsequent claims.

### Brief description of the drawings

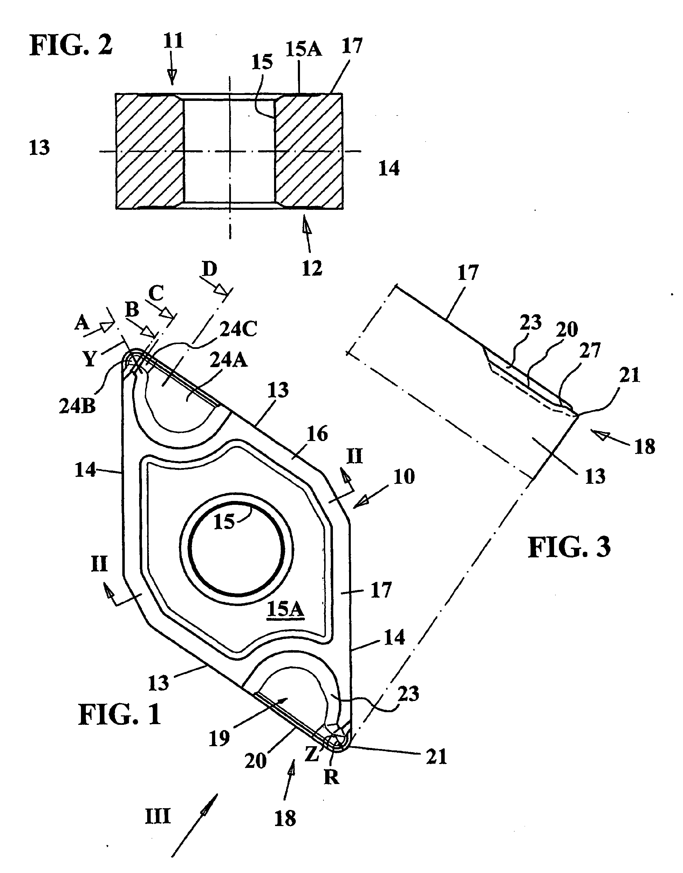

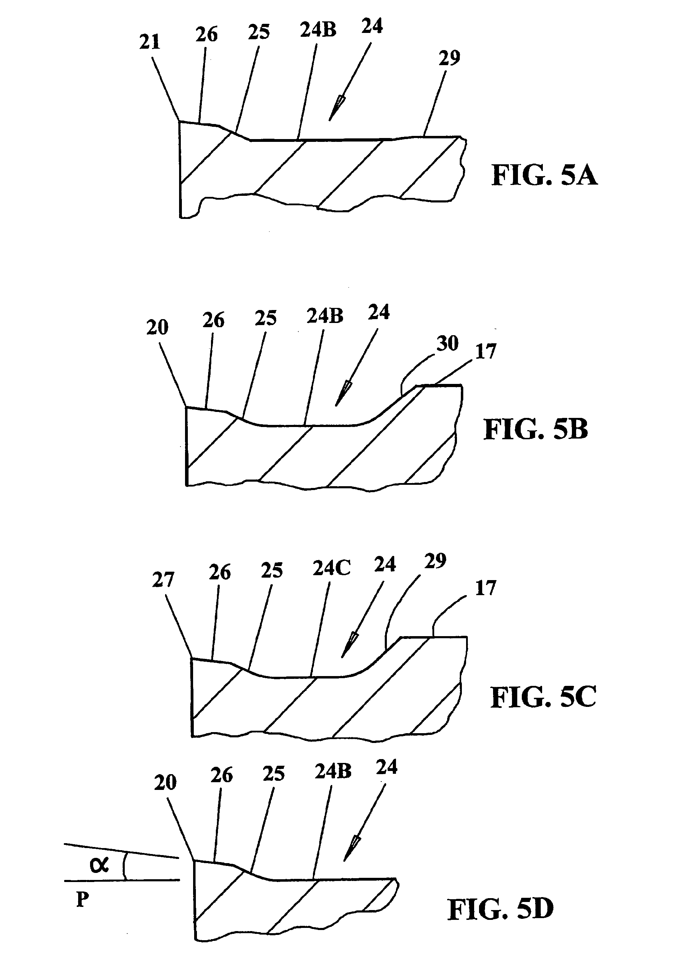

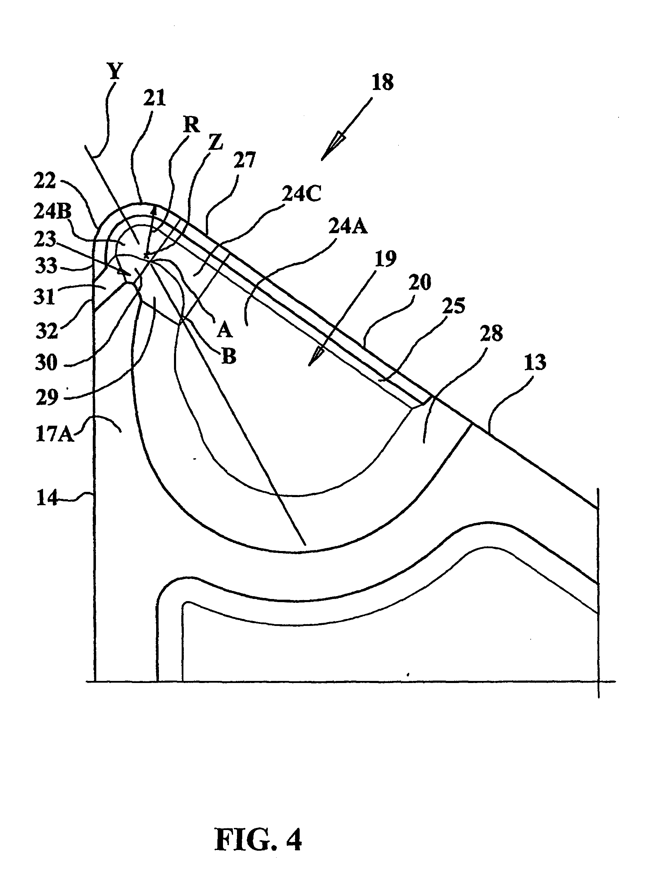

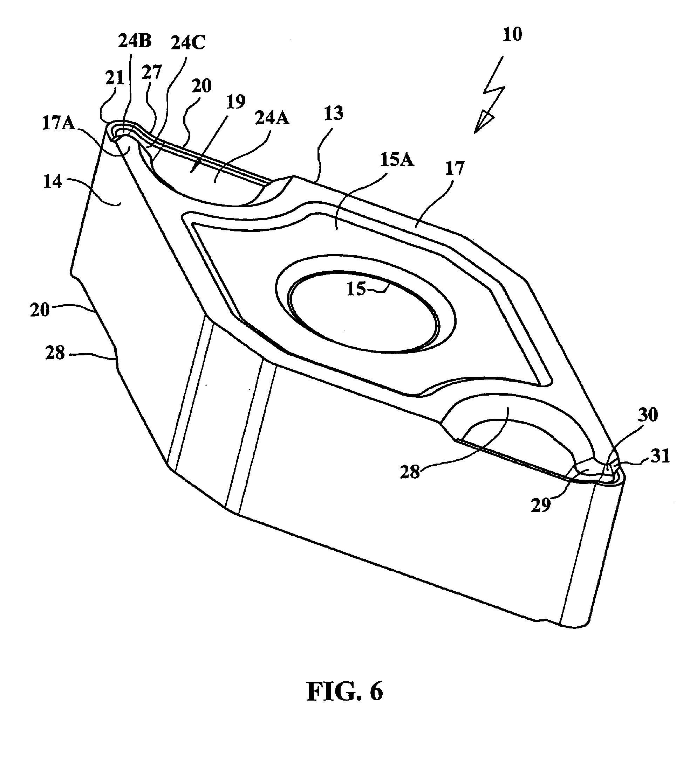

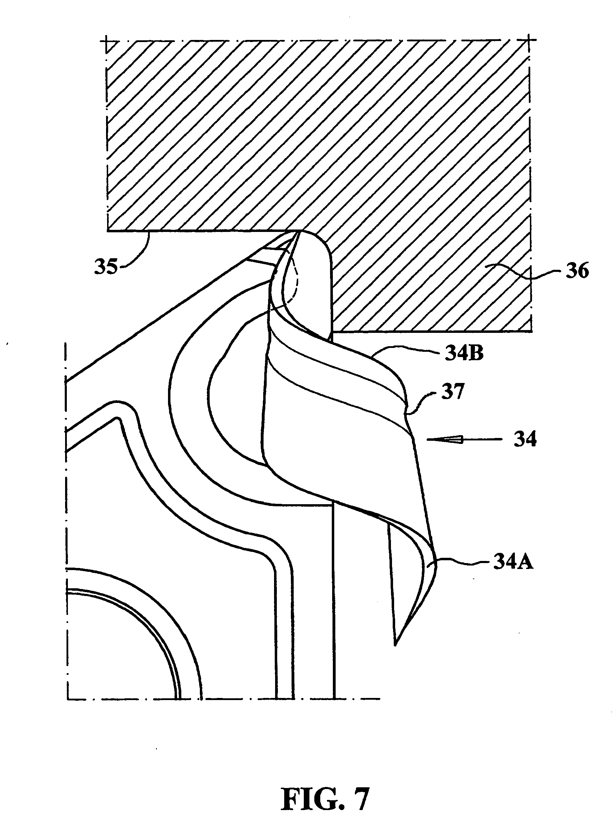

An example of the invention is described hereinafter with reference to the enclosed drawings, where Fig. 1 shows a top view of a turning insert according to the present invention. Fig. 2 shows a cross-section according to the line II-II in Fig. 1. Fig. 3 shows a side view according to the arrow III in Fig. 1. Fig. 4 shows a magnified cutting corner of Fig. 1. Fig. 5A shows a cross-section according to the line A in Fig. 1. Fig. 5B shows a cross-section according to the line B in Fig. 1. Fig. 5C shows a cross-section according to the line C in Fig. 1. Fig. 5D shows a cross-section according to the line D in Fig. 1. Fig. 6 shows a perspective view of the turning insert. Fig. 7 shows the turning insert during internal turning of a work piece.

### Detailed description of the invention

With reference to Figs. 1-6 a double sided turning insert 10 according to the present invention is shown with a chip former or chip breaker 23, developed in order to be used mostly during internal turning of metallic workpieces. The cutting insert may of course be used also for external turning but then the advantage of good chip control becomes less important. The turning insert 10 has a polygonal body of hard wear resistant material such as cemented carbide, i.e. pressed and sintered tungsten carbide, or ceramics or similar. The body has an upper surface 11 and a lower surface 12 provided in separate, substantially parallel planes and several side surfaces 13, 14, connecting said surfaces. The shown cutting insert 10 has a rhombic basic shape and comprises a central fastening hole 15. The cutting insert has two acute angled cutting corners 18 on each of the upper and lower surfaces. In the shown embodiment the acute angle is 55° but can alternatively be 60° or 80°. Also cutting inserts having 90° corners are included in the present invention. A recessed space 15A is formed around the hole 15. A substantially circumferential land portion 16 with a planar support surface or border surface 17, is formed to improve abutment between the cutting insert and the holder. This means that possible dirt on the support surface of the holder influences the cutting insert position to only a slight degree or not at all. The border surface 17 constitutes a part of the endless land portion 16 that in the example is substantially ring-shaped rhombic. By being endless and ring-shaped this land portion 16 completely surrounds the recessed space 15A which connects to the hole 15. In the shown embodiment both part surfaces 15A, 17 are substantially planar and mutually parallel, and extending substantially perpendicularly to the center axis of the hole 15.

Each cutting corner 18 comprises a recessed portion 19, Fig. 4, which is recessed relative to the surface 17. The line of intersection between the recessed portion 19 and the edge surface 13 forms a major cutting edge 20 and the line of intersection between the recessed portion 19 and an intermediate portion between the side surfaces 13 and 14 forms a nose cutting edge 21. The nose cutting edge 21 consists of a number of straight segments 22, which together forms a substantially part-circular cutting edge, the radius of which being depicted by R and the radius center of which being depicted by Z.

At least one chip breaker 23 is provided in each of the lower 12 and the upper surfaces 11 such that both sides of the cutting insert can be used economically. The surfaces 11 and 12 in the preferred embodiment are identical but mirror imaged such that when the cutting insert is turned upside down such that the lower surface 12 gets into position for turning it will have an appearance which is identical to the upper surface 11. The side surfaces or the flanks 13, 14 of the cutting corner 18 encloses an angle, the mid portion of which defines a bisector Y. The chip breaker 23 is asymmetrical relative to the bisector Y, i.e. it is provided substantially in the part of the upper side of the cutting corner 18 which does not contain the major cutting edge 20. The bottom surface 24 is provided in two substantially parallel part surfaces 24A, 24B, which are separated in planes by a step 24C. The bottom surface 24 connects to a chip surface 25 in a direction towards the cutting edges 20, 21. The chip surface 25 further connects to a bevel 26 intended to reinforce the associated cutting edge 20, 21s. The bevel 26 forms an angle α between 0-15°, preferably around 5-10°, relative to a plane P which is parallel to the border surface 17, see Fig. 5D. The major cutting edge 20 is substantially parallel with the plane P and continues straightly into a second cutting edge 27 in a top view, which edge rises upwardly in the plane of the edge surface 13 towards the nose cutting edge 21. In that way the distance in the height direction between the cutting edge and the chip surface is held substantially constant in the area of the cutting corner 18. The major cutting edge 20 is provided lower than the nose cutting edge 21 in order to obtain low cutting forces. This reduces particularly the radial cutting force during turning. The cutting edge 27 and the surface portion 24C may be concave or straight.

The chip breaker 23 consists of an inclining wall that according to Figs. 5B and 5C slopes from the border surface 17 downwardly towards a bottom surface 24. The wall consists of a plurality of segments including a substantially part-conical first segment 28 extending from the edge surface 13 substantially perpendicularly into the cutting insert and bends past the bisector Y and then again approaches the bisector in direction towards the nose cutting edge 21. A second segment 29 connects to the first segment 28 and intersects the bisector Y at two places A and B and connects to the rising surface portion 24C. The segment 29 further connects to a third segment 30, which connects to the surface portion 24B at the part that faces away from the major cutting edge 20. The segment 30 does not reach the center Z of the radius R but is provided substantially within a circle which is defined by the radius R. A fourth segment 31 connects to the third segment 30, said segment 31 intersecting the trailing edge surface 14 along a sloping line of intersection 32. The line of intersection 32 connects to a passive part of a straight extension 33 of the nose cutting edge 21. The segment 31 connects downwardly to the chip surface 25 and the bevel 26.

Fig. 7 shows that the chip breaker 23 is formed such that the chip 34 is guided in a direction where it does not damage the generated surface 35. The cut chips must also be guided in a direction where they do not influence the subsequent machining. To obtain a direction of the chip forming process which does not destroy the generated surface, and to avoid that the chips after being cut from the work piece 36 interfere with the machining it is important that the chips are formed such that they do not hit against the work piece but instead are directed towards the edge surface 13 of the cutting insert. In order to achieve this the chip breaker 23 is provided at a relatively great distance from the major cutting edge 20 such that one edge 34A of the chip 34 is formed with a large radius, that is the segment 28 does not come in contact with the chip during the internal turning. It is thereby possible to form the chip such that it obtains a pitch. To form chips with this pitch which makes it possible to guide the chips past the work piece and down on the edge surface 13 on the cutting insert, the contact occurs between the chip breaker and the chip at the edge 34B of the chip which is closest to the work piece while the other edge 34A of the chip is not obstructed by the chip breaker, but can be formed freely. In order to achieve this the forward segments 29, 30 of the chip breaker 23 are provided close to both the nose cutting edge 21 and the cutting edge 27.

In addition during internal turning and long moment arms at the turning tool a cutting insert 10 according to the present invention generates low cutting forces whereby a stable machining is obtained.

From the view of stability it is also important that contact surfaces between the tool holder and the cutting insert is formed such that a sufficient support is obtained as close as possible to the cutting process. This has been achieved by providing the upper side or support surface 17A of the chip breaker in connection with the trailing edge surface 14 at only one side of the bisector Y. The distance between the support surface 17A and the bisector is of substantially the same magnitude as the distance between the support surface 17A and of the radius R center Z. Thereby a good support is obtained between for example a shim and the cutting insert 10 relatively close to the nose cutting edge, that is close to the cutting process.

The invention is in no way limited to the above-described embodiments but may be varied freely within the limits of the subsequent claims.

## Claims

1. A double-sided turning insert preferably for internal machining, comprising a polygonal body of hard wear resistant material, which has an upper surface (11) and a lower surface (12) provided in separate substantially parallel planes and a number of, said surfaces connecting, side surfaces (13,14), whereof a first edge surface (13) is a leading edge surface and a second edge surface (14) is a trailing edge surface during machining, at least one chip former (23) provided in at least one of the lower and upper surfaces, at least one rounded cutting corner (18) having cutting edges (20,21,27) formed at the intersection area of two edge surfaces, said cutting corner (18) comprising a nose cutting edge (21) which is defined by a radius (R), said cutting corner defines a bisector (Y), said chip former (23) being asymmetrically arranged relative to the bisector, said chip former comprising a support surface (17A) which is provided in the plane of the upper side (11), said chip former (23) having bordering surfaces (29,28) intersected by the bisector (Y) at least twice at said area,
**characterized in that** the support surface (17A), within a circular zone defined by the radius (R), is provided at only one side of the bisector (Y).

2. The double-sided turning insert according to claim 1,
**characterized in that** the chip former (23) extends from the trailing edge surface (14) in direction towards the leading edge surface (13).

3. The double-sided turning insert according to claim 1,
**characterized in that** the chip former (23) comprises a concave segment (28) and a convex segment (29,30,31), whereof only the convex segment (29,30,31) is intended to engage with a chip during turning.

4. The double-sided turning insert according to claim 3,
c h a r a c t e r i z e d i n that the radius (R) has a center (Z) and that the convex segment extends from the trailing edge surface (14) in direction towards the leading edge surface (13).

5. The double-sided turning insert according to claim 4,
**characterized in that** the nose cutting edge (21) is provided in a plane and connects to a major cutting edge (20) provided in another plane via a sloping cutting edge (27), said sloping cutting edge being provided in the same plane as the major cutting edge (20) and the leading edge surface (13).

6. The double-sided turning insert according to claim 5,
**characterized in that** the largest distance between the concave segment (28) and the plane of the leading edge surface (13) is at least three times larger than the smallest distance between the convex segment (29,30,31) and the plane of the leading edge surface.

## Patentansprüche

1. Zweiseitiger Schneideinsatz zum Drehen vorzugsweise zur Bearbeitung von innen, mit einem polygonalen Körper aus einem harten verschleißfesten Material, welcher eine obere Fläche (11) und eine untere Fläche (12) aufweist, die in getrennten, im wesentlichen parallelen Ebenen vorgesehen sind, und mit einer Anzahl von diese Flächen verbindenden Seitenflächen (13, 14), wobei während der Bearbeitung eine erste Kantenfläche (13) eine führende Kantenfläche ist, und eine zweite Kantenfläche (14) eine nachlaufende Kantenfläche ist, mit mindestens einem Spanformer (23), der zumindest in der unteren oder der oberen Fläche vorgesehen ist, mit mindestens einer gerundeten Schneidecke (18), welche Schneidkanten (20, 21, 27) aufweist, die in dem Schnittbereich der zwei Kantenflächen gebildet werden, wobei die Schneidekke (18) eine nasenförmige Schneidkante (21) aufweist, welche durch einen Radius (R) definiert ist, wobei die Schneidecke eine Winkelhalbierende (Y) definiert, wobei der Spanformer (23) asymmetrisch relativ zu der Winkelhalbierenden angeordnet ist, wobei der Spanformer eine Stützfläche (17A) aufweist, die in der Ebene der oberen Seite (11) vorgesehen ist, wobei der Spanformer (23) angrenzende Flächen (29, 28) aufweist, die von der Winkelhalbierenden (Y) mindestens zweimal in dieser Fläche geschnitten werden, **dadurch gekennzeichnet, daß** die Stützfläche (17A) in einem kreisförmigen Bereich, der durch den Radius (R) definiert ist, auf nur einer Seite der Winkelhalbierenden (Y) bereitgestellt wird.

2. Zweiseitiger Schneideinsatz zum Drehen nach Anspruch 1, **dadurch gekennzeichnet, daß** sich der Spanformer (23) von der nachlaufenden Kantenfläche (14) in einer Richtung hin zu der führenden Kantenfläche (13) erstreckt.

3. Zweiseitiger Schneideinsatz zum Drehen nach Anspruch 1, **dadurch gekennzeichnet, daß** der Spanformer (23) einen konkaven Abschnitt (28) und einen konvexen Abschnitt (29, 30, 31) aufweist, wovon nur der konvexe Abschnitt (29, 30, 31) dafür vorgesehen ist, während des Drehens mit einem Span in Eingriff zu treten.

4. Zweiseitiger Schneideinsatz zum Drehen nach Anspruch 3, **dadurch gekennzeichnet, daß** der Radius (R) einen Mittelpunkt (Z) aufweist und sich der konvexe Abschnitt von der nachlaufenden Kantenfläche (14) in eine Richtung hin zu der führenden Kantenfläche (13) erstreckt.

5. Zweiseitiger Schneideinsatz zum Drehen nach Anspruch 4, **dadurch gekennzeichnet, daß** die nasenförmige Schneidkante (21) in einer Ebene vorgesehen ist und mit einer Hauptschneidkante (20), die in einer anderen Ebene vorgesehen ist, über eine geneigte Schneidkante (27) verbunden ist, wobei die geneigte Schneidkante in der gleichen Ebene vorgesehen ist wie die Hauptschneidkante (20) und die führende Kantenfläche (13).

6. Zweiseitiger Schneideinsatz zum Drehen nach Anspruch 5, **dadurch gekennzeichnet, daß** der größte Abstand zwischen dem konkaven Abschnitt (28) und der Ebene der führenden Kantenfläche (13) mindestens dreimal größer ist als der kleinste Abstand zwischen dem konvexen Abschnitt (29, 30, 31) und der Ebene der führenden Kantenfläche.

## Revendications

1. Plaquette de tournage double face de préférence pour un usinage intérieur, comprenant un corps polygonal de matériau dur résistant à l'usure, qui possède une surface supérieure (11) et une surface inférieure (12) situées dans des plans séparés globalement parallèles et un certain nombre de surfaces latérales (13, 14), reliées auxdites surfaces, où une première surface de bord (13) est une surface de bord d'attaque et une seconde surface de bord (14) est une surface de bord de fuite pendant l'usinage, au moins une formeuse de copeaux (23) étant située dans au moins une des surfaces inférieure et supérieure, au moins un angle de coupe arrondi (18) ayant des arêtes de coupe (20, 21, 27) formées au niveau de la zone d'intersection des deux surfaces de bord, ledit angle de coupe (18) comprenant une arête de coupe de nez (21) qui est définie par un rayon (R), ledit angle de coupe définit une bissectrice (Y), ladite formeuse de copeaux (23) étant agencée de manière asymétrique par rapport à la bissectrice, et ladite formeuse de copeaux comprenant une surface de support (17A) qui est située dans le plan du côté supérieur (11), ladite formeuse de copeaux (23) comportant des surfaces de bord (29, 28) coupées par la bissectrice (Y) au moins deux fois au niveau de ladite zone, **caractérisée en ce que** la surface du support (17a), dans une zone circulaire définie par le rayon (R), est située au niveau d'un seul côté de la bissectrice (Y).

2. Plaquette de tournage double face selon la revendication 1, **caractérisée en ce que** la formeuse de copeaux (23) s'étend depuis la surface de bord de fuite (14) dans une direction vers la surface de bord d'attaque (13).

3. Plaquette de tournage double face selon la revendication 1, **caractérisée en ce que** la formeuse de copeaux (23) comprend un segment concave (28) et un segment convexe (29, 30, 31) où seul le segment convexe (29, 30, 31) doit être au contact d'un copeau pendant le tournage.

4. Plaquette de tournage double face selon la revendication 3, **caractérisée en ce que** le rayon (R) a un centre (Z) et **en ce que** le segment convexe s'étend de la surface de bord de fuite (14) vers la surface de bord d'attaque (13).

5. Plaquette de tournage double face selon la revendication 4, **caractérisée en ce que** l'arête de coupe de nez (21) est située dans un plan et reliée à une arête de coupe principale (20) située dans un autre plan via une arête de coupe en pente (27), ladite arête de coupe en pente (27) étant située dans le même plan que l'arête de coupe principale (20) et la surface du bord d'attaque (13).

6. Plaquette de tournage double face selon la revendication 5, **caractérisée en ce que** la plus grande distance entre le segment concave (28) et le plan de la surface de bord d'attaque (13) est au moins trois fois plus grande que la plus petite distance entre le segment convexe (29, 30, 31) et le plan de la surface de bord d'attaque.
